# EUROPÄISCHE PATENTANMELDUNG

(11) **EP 1 632 161 A1**
(43) Veröffentlichungstag der Anmeldung: **08.03.2006**
(21) Anmeldenummer: 05019161.8
(22) Anmeldetag: 02.09.2005
(51) Int. Cl.: A47K 1/09

(54) **Halterung zur lösbaren Befestigung eines Gegenstandes an einer Wand, sowie Einschubelement für eine derartige Halterung**

(30) Priorität: 02.09.2004 DE 102004042526
(71) Anmelder: Hailo-Werk Rudolf Loh GmbH & Co. KG, D-35708 Haiger (DE)
(72) Erfinder: Hartmann, Guido, 57 537 Wissen (DE)
(74) Vertreter: Basfeld, Rainer

(57) **Zusammenfassung**

Halterung zu lösbaren Befestigung eines Gegenstandes (21) an einer Wand, umfassend ein an einer Wand befestigbares Basiselement (10), wobei die Halterung senkrecht zu dem Basiselement (10) ausgerichtete oder im wesentlichen ausladend an dem Basiselement (10) angebrachte oder von dem Basiselement gebildete Aufnahmemittel umfasst, die als Aufnahmehülse (11 a) oder Aufnahme (123) ausgeführt sind, wobei die Aufnahmemittel zum Einschieben mindestens eines Einschubelements (20) mit dem daran befestigten Gegenstand (21) geeignet und mit einem Arretierungselement (15) zur lösbaren jedoch schraubenlosen Befestigung des mindestens einen Einschubelementes (21) an dem Basiselement (10) ausgestattet sind. Die Erfindung betrifft weiterhin ein Einschubelement (20) für eine derartige Halterung, das eine längliche Gestalt aufweist, wobei einerseits endseitig ein Langloch (22) und andererseits endseitig der zu befestigende Gegenstand (21) angebracht ist.

## Beschreibung

Die vorliegende Erfindung betrifft eine Halterung zur lösbaren Befestigung eines Gegenstandes an einer Wand gemäß dem Oberbegriff des Anspruchs 1, sowie ein Einschubelement für eine derartige Halterung gemäß dem Oberbegriff des Anspruchs 17.

Aus der DE 39 05 413 C2 ist eine Halterung zur lösbaren Befestigung diverser Gegenstände an einer Wand der eingangs genannten Gattung bekannt. Es handelt sich um eine abnehmbare Halterung einer Ablage an einer Wand, wobei eine derartige Ablage z. B. im Badbereich für Seifenschalen verwendet wird oder es sich um eine Halterung für Zahnputzbecher, kleine Spiegel oder andere Badaccessoires handelt. Die bekannte Vorrichtung umfasst eine Wandhalterung als Basiselement, die an der Wand z. B. angeschraubt werden kann. Weiterhin ist eine Ablagehalterung vorhanden, die nach der Befestigung der Wandhalterung quasi von oben auf die Wandhalterung aufgeschoben wird, wodurch eine Rastverbindung zwischen beiden Teilen hergestellt wird. Dazu hat die Ablagehalterung zwei Federarme mit Rastnasen und die Wandhalterung weist einen Haltebock auf mit zwei Spreizschrägen. Das Abnehmen des Ablagehalterungsteils erfolgt über eine Drucktaste, die am Wandhalterungsteil vorgesehen ist und die nach oben gedrückt wird, wodurch dann Ausrastschrägen eines Ausrastteils die Federarme der Ablagehalterung spreizen, so dass die Rastnasen vom Haltebock freikommen und das Ablagehalterungsteil nach oben hin abgenommen werden kann.

Aus dem Stand der Technik sind andere Halterungen für Badezimmerarmaturen und Badezimmeraccessoires bekannt, die jedoch in der Regel eine Schraubverbindung zwischen Basiselement und Einschubelement umfassen. Die DE 37 11 679 A1 beschreibt eine solche Halterung für Badezimmerarmaturen, bei der das an der Wand anbringbare Basiselement als blockförmige Patrize ausgebildet ist.

Dieses Basiselement wird von einem ebenfalls im Wesentlichen blockförmig ausgebildeten Matrizenblock umgriffen, der eine Aufnahmeaussparung hat, die im Wesentlichen der Form des Basiselements entspricht. Das Basiselement weist Bohrungen auf, die zu dessen Befestigung an der Wand dienen und von dazu verwendeten Halteschrauben durchgriffen werden. Das an dem Basiselement anbringbare Einschubelement wird ebenfalls über eine Schraubverbindung an dem Basiselement fixiert und weist dazu eine entsprechende Gewindebohrung auf, in die eine Fixierschraube eingeschraubt wird. Zur Anbringung einer solchen Halterung an der Wand benötigt man somit Werkzeug und auch wenn die Verbindung zwischen dem Einschubelement und dem Basiselement (Patrize und Matrizenblock) gelöst werden soll, muss die genannte Fixierschraube gelöst werden.

Die DE 31 00 306 A1 beschreibt einen Wandhalter für eine sanitäre Trockenarmatur, bei der als Wandhalter ebenfalls eine Art Basisteil dient, welches eine Einstecköffnung aufweist für ein Steckerteil, das in diese eingeführt wird. Es ist in der Wand der Einstecköffnung eine Quergewindebohrung vorgesehen, so dass in dieser ein Gewindezapfen eingeschraubt werden kann, mittels dessen das Steckerteil fixiert wird. Das konsolartige Basisteil hat Befestigungslöcher, so dass es an der Wand angeschraubt werden kann.

Die DE 31 49 497 A1 beschreibt eine ähnliche sanitäre Trockenarmatur mit Wandhalter, wobei es sich bei der Trockenarmatur zum Beispiel um eine Seifenschale handelt. Der als Basisteil vorgesehene Wandhalter ist hier als rechtwinkliges Winkelstück ausgebildet, welches an der Wand angeschraubt wird. An dessen Unterseite ist ein U-förmiges Winkelstück befestigt, in das wiederum ein Ansatz der Seifenschale eingesteckt wird. Durch den Steg des U-förmigen Winkelstücks greift eine Stellschraube, die mit einer Mutter fixiert wird. Auch die Verbindung zwischen dem rechtwinkligen Winkelstück und dem U-förmigen Winkelstück wird über Schrauben vorgenommen.

Die DE 33 30 785 A1 beschreibt eine Vorrichtung zur Halterung von Einrichtungsgegenständen an einer Wand, insbesondere zur Anbringung von Wohnbadausstattungsgegenständen. Diese Vorrichtung umfasst eine an der Wand zu befestigende Halteplatte, die an die Wand geschraubt wird. Auf der Halteplatte ist ein Fußteil eines Sanitärgegenstands lösbar befestigt, zum Beispiel ein Überwurfhaken, ein Badetuchhalter oder dergleichen. Das Fußteil des Überwurfhakens ist als zylindrischer Hohlkörper ausgebildet und in seiner Zylinderwand ist eine Gewindebohrung vorgesehen, so dass man über eine Feststellschraube den Überwurfhaken an der Halteplatte festlegen kann. Eine drehbeweglich angeordnete zylindrische Deckhülse wird dann noch auf das Fußteil aufgesetzt. Die Verbindung zwischen dem an der Wand anbringbaren Basiselement (Halteplatte) und dem daran lösbar zu befestigenden Fußteil des Sanitärgegenstands ist auch hier eine Schraubverbindung.

Bei der aus der DE 39 05 413 C2 bekannten Halterung mit den Merkmalen der eingangs genannten Gattung ist das Abnehmen des zu haltenden Gegenstandes nach Entfernen beispielsweise einer an diesem befestigten Ablage nur durch eine Bewegung nach oben, d h. eine Aushebebewegung möglich, nachdem über die Drucktaste die entsprechende Sicherung gelöst wurde. Es ist jedoch nicht möglich, zu haltenden Gegenstand durch eine Art Abziehbewegung quasi in Richtung senkrecht zur Wand von dem Basiselement zu lösen.

Die Aufgabe der vorliegenden Erfindung besteht demnach darin, eine Halterung zur lösbaren Befestigung diverser Gegenstände an einer Wand mit den Merkmalen der eingangs genannten Gattung zur Verfügung zu stellen, die ein Lösen des zu haltenden Gegenstandes von dem Basiselement durch eine Abziehbewegung von der Wand weg ermöglicht.

Die Lösung dieser Aufgabe liefert eine Halterung zur lösbaren Befestigung diverser Gegenstände an einer Wand der eingangs genannten Gattung mit den kennzeichnenden Merkmalen des Anspruchs 1. Erfindungsgemäß ist vorgesehen, dass die Halterung senkrecht zu dem Basiselement ausgerichtete oder im wesentlichen ausladend an dem Basiselement angebrachte oder von dem Basiselement gebildete Aufnahmemittel umfasst, die als Aufnahmehülse oder Aufnahme ausgeführt sind, wobei die Aufnahmemittel zum Einschieben mindestens eines Einschubelements mit dem daran befestigten Gegenstand geeignet und mit einem Arretierungselement zur lösbaren jedoch schraubenlosen Befestigung des mindestens einen Einschubelementes an dem Basiselement ausgestattet sind. Durch die senkrechte Ausrichtung der vorzugsweise länglichen Aufnahmehülse wird die Ausziehrichtung bzw. Einschubrichtung für das Einschubelement weitgehend vorgegeben und es wird auf Grund des nunmehr grundsätzlich zur Verfügung stehenden unbegrenzten Bauraumes eine sehr stabile Verbindung zwischen Wand und Gegenstand ermöglicht. Der nunmehr zur Verfügung stehende Bauraum ergibt sich im Wesentlichen durch die Verlagerung der eigentlichen lösbaren Befestigung in einen Bereich, der ausladend vor dem eigentlichen Basiselement bzw. Grundkörper stattfinden kann. Auch muss durch diese Bauweise nicht auf kleinbauende Schraubverbindungen zurückgegriffen werden, sondern es können beispielsweise auch länglicher Arretierungselement, beispielsweise in Form einer speziell ausgestaltetet Blattfeder zur Anwendung kommen.

In einer vorteilhaften Ausgestaltung der vorliegenden Erfindung kann vorgesehen sein, dass die Aufnahmehülse eine längliche Form aufweist und mit einem Aufnahmekanal ausgestattet ist, wobei der Arretierungsmechanismus zumindest abschnittsweise innerhalb des Aufnahmekanals angeordnet ist. Eine derartige Anordnung eines Arretierungselementes wird erst durch die erfindungsgemäße Ausgestaltung der vorgeschlagenen Halterung möglich. Dennoch kann weitestgehend platzsparend konstruiert werden und das Arretierungselement kann innerhalb der Aufnahmehülse, vorzugsweise in länglicher Richtung eingebracht sein.

In diesem Zusammenhang kann vorteilhafterweise vorgesehen sein, dass es sich bei dem Arretierungselement um eine Längliche Blattfeder handelt. Ein derartiges Bauelement ist einfach zu verbauen, da es beispielsweise nicht wie bei einer federbelastete Kugel mindestens zweier Arbeitsschritte bedarf, da eine Blattfeder in der Regel einfach eingesteckt werden kann, wohingegen bei einer federbelastete Kugel zunächst eine Spiralfeder eingesetzt, gehalten und anschließend die Kugel eingesetzt werden muss.

Vorzugsweise wird bei der erfindungsgemäßen Lösung die Betätigung des Arretierungselements nicht oder nicht nur über Abschnitte dieses Bauteils selbst hergestellt, sondern es wird dazu mindestens ein weiteres Bauteil verwendet. Dies hat herstellungstechnische und konstruktive Vorteile. Dieses mindestens eine weitere Bauteil kann z. B. ein als eine Art Tastknopf ausgebildetes Bauteil sein, welches insbesondere über spreizende Rastarme oder Rastzungen mit Rastnasen verfügt. Als Arretierungselement oder als ein Teil oder Abschnitt davon kann, wie bereits oben angedeutet, ein aus einem in sich federnden etwas biegsamen Material bestehendes und vorzugsweise vergleichsweise flach ausgebildetes Bauteil verwendet werden, welches beispielsweise aus Federblech oder dergleichen besteht. Das tastknopfartige Bauteil kann herstellerseitig in das Basiselement integriert bzw. mit diesem verbunden sein. Bei dieser möglichen konstruktiven Lösungsvariante wird die lösbare Verbindung zwischen Basiselement und Arretierungselement beispielsweise wie folgt hergestellt:

Das Basiselement, welches beispielsweise durch eine Schraubverbindung oder Klebverbindung an einer Wand anbringbar ist, umfasst einen Grundkörper, mit dem in der Regel das tastknopfartige Bauteil herstellerseitig verbunden wird, z.B. durch eine Rast- oder Clipsverbindung. An dem Grundkörper befindet sich die Aufnahmehülse für das Einschubelement, die in der Regel lang gestreckt ist und die sich im wesentlichen senkrecht zur Wand erstreckt, d.h. von der Wand aus gesehen nach vorn ragt. Das Basiselement kann eine Abdeckung aufweisen, so dass sich ein in sich geschlossener Gehäusekorpus ergibt, was insbesondere aus optischen Gründen vorteilhaft ist. Das tastknopfartige Bauteil ragt vorteilhafter Weise etwas aus dem Grundkörper des Basiselements heraus. Dieses tastknopfartige Bauteil verfügt beispielsweise über eine Art Zapfen und wenn man diesen Tastknopf am Basiselement eindrückt, bewegt sich der Zapfen so, dass er das eine Ende des federnden biegsamen Arretierungselementes, insbesondere einen Betätigungsbereich, herunterdrückt, so dass dieses aus einer Verriegelungsposition freikommt und dann das flache, vorzugsweise im Querschnitt rechteckförmige Einschubelement aus der Aufnahme des Basiselements herausgezogen werden kann. An dem Arretierungselement ist die Halterung für den an der Wand anzubringenden Gegenstand angebracht. Diese kann dann beispielsweise ausgetauscht werden gegen ein Einschubelementelement, an dem sich ein anderes Badaccessoire befindet und dieses neue Einschubelementelement wird dann wieder in die Aufnahmehülse eingeschoben. Die Halterung für das Accessoire lässt sich also einfach und ohne Zuhilfenahme eines Werkzeugs austauschen, während das Basiselement an der Wand verbleibt.

In einer weiteren vorteilhaften Ausgestaltung der vorliegenden Erfindung kann vorgesehen sein, dass das Arretierungselement in nachfolgender Abfolge einen Anschlussbereich, einen Federbereich, eine Rampe, eine Kante, sowie einen Betätigungsbereich aufweist.

Eine derartige Ausgestaltung des Arretierungselements eignet sich, angenähert an die Form einer Blattfeder, in besonderer Weise um die unterschiedlichen Funktionen des Arretierungselementes zu erfüllen und ist, gemessen an dem Funktionsumfang, leicht herzustellen.

In einer weiteren vorteilhaften Ausgestaltung der vorliegenden Erfindung kann vorgesehen sein, dass das die Aufnahmehülse auf der dem Basisteil abgewandten Bereich eine Aufnahme aufweist, wobei das Arretierungselement mit dem Anschlussbereich in der Aufnahme befestigt ist, wobei sich das Arretierungselement in Richtung des Basiselements durch die Aufnahmehülse erstreckt. Hier zeigt sich, die, im Gegensatz zur federbelasteten Kugel, einfache Montagemöglichkeit der vorgeschlagenen Ausführungsform.

Es kann weiterhin vorgesehen sein, dass die Verbindung zwischen dem Basiselement und dem mindestens einen Einschubelement wenigstens einen Bajonettverschluss oder Drehriegelverschluss umfasst.

Es kann weiterhin vorgesehen sein, dass das mindestens eine Einschubelement gegen die Kraft einer Feder in die Aufnahmemittel einschiebbar ist.

Es kann weiterhin vorgesehen sein, dass die Halterung zwei Einschubelemente umfasst, die als endseitig frei gegeneinander federnde Schenkel ausgebildet sind und das Basiselement eine diese Schenkel beim Aufschieben übergreifende Aufnahme aufweist oder ausbildet, mit der die Schenkel eine Rastverbindung eingehen können.

Es kann weiterhin vorgesehen sein, dass nach außen ragende Vorsprünge an den Schenkeln angeordnet sind, die in Aufnahmen, vorzugsweise Bohrungen, des Basiselements einrasten können.

Die in den weiteren Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Eine weitere Aufgabe der vorliegenden Erfindung liegt darin, ein geeignetes und einfach aufgebautes, sowie preiswert herstellbares Einschubelement für zuvor beschrieben Halterung aufzuzeigen.

Diese Aufgabe wird durch die kennzeichnenden Merkmale des Einschubelements gemäß Anspruch 17 gelöst.

Weitere vorteilhafte Weiterbildungen ergeben sich aus den darauf zurückbezogenen Unteransprüchen.

Nachfolgend wird die vorliegende Erfindung anhand von Ausführungsbeispielen unter Bezugnahme auf die beiliegenden Zeichnungen näher beschrieben. Dabei zeigen
- Fig. 1: eine perspektivische Ansicht des Basiselements und des Arretierungselements, wobei jedoch das an diesem anzubringende Accessoire nicht dargestellt ist;
- Fig. 2: eine Explosionsdarstellung, aus der die einzelnen Bauteile des Basiselements sowie das Arretierungselement erkennbar ist;
- Fig. 3a-c: verschiedene Ansichten des Grundkörpers des Basiselements;
- Fig. 4a-c: verschiedene Ansichten des Tastknopfs, der mit dem Grundkörper verrastet wird;
- Fig. 5a-c: verschiedene Ansichten der Abdeckungen des Basiselements;
- Fig. 6a-c: verschiedene Ansichten der Hülse des Basiselements;
- Fig. 7a-b: verschiedene Ansichten des Federblechs;
- Fig. 8: eine Ansicht des montierten Wandhalters im Längsschnitt;
- Fig. 9: eine schematische Darstellung eines Einschubelements mit einem Gegenstand in einer seitlichen, teilweise geschnittenen Ansicht;
- Fig. 10: eine schematische Darstellung eines Einschubelements mit einem Gegenstand in einer Draufsicht;
- Fig. 11: ein Einschubelement in einer geschnittenen Querschnittsansicht;
- Fig. 12: eine weitere schematisch vereinfachte Ansicht einer alternativen Lösungsvariante;
- Fig. 13: eine perspektivische Explosionsdarstellung der in Fig. 8 gezeigten Variante;
- Fig. 14: eine Draufsicht auf ein Detail aus Fig. 8.

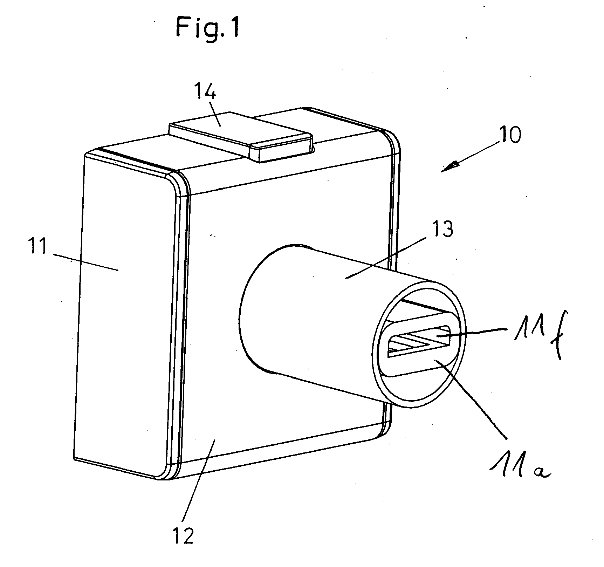

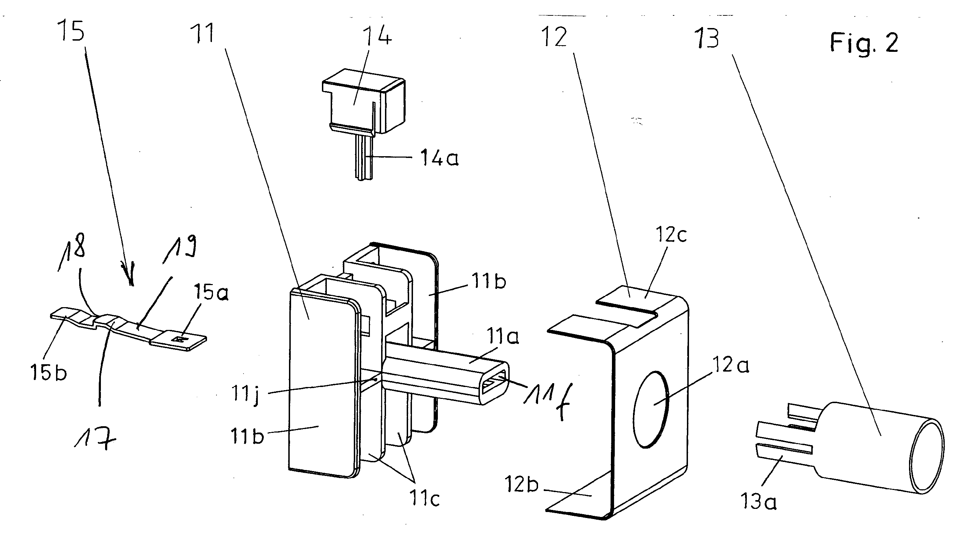

Zunächst wird auf die Fig. 1 und 2 Bezug genommen.

Fig. 1 zeigt das Basiselement 10 perspektivisch im montierten Zustand. Fig. 2 zeigt eine entsprechende perspektivische Explosionsdarstellung, in der der Tastknopf 14 separat dargestellt ist, der Grundkörper 11, der an der Wand angeschraubt wird, die Abdeckung 12, die kein separates Bauteil sein muss, sondern mit dem Grundkörper 11 zusammen als ein Bauteil ausgeführt sein kann. Weiter ist noch eine Hülse 13 des Basiselements erkennbar, sowie ein aus einem federnden biegsamen Material, z.B. aus Federblech hergestelltes Arretierungselement 15.

Aus Fig. 2 erkennt man weiterhin, dass der Grundkörper 11 des Basiselements, welcher an der Wand angebracht wird, als Aufnahme für das als Federblech ausgestaltete Arretierungselement 15 eine im Querschnitt etwa langovale Aufnahmehülse 11a aufweist, die gegenüber Seitenwänden 11 b des Grundkörpers, die diesen an beiden Seiten begrenzen und Zwischenwänden 11 c ein Stück vorsteht. Diese als Aufnahme dienende Aufnahmehülse 11a wird im montierten Zustand (wie Fig. 1 zeigt), abgedeckt von einer weiteren vorzugsweise abschnittsweise zylindrischen Hülse 13. Diese weitere Hülse 13 ist über geschlitzte wandseitige Fortsätze 13a mit dem Grundkörper des Basiselements verbindbar und bildet dann einen Bestandteil des Basiselements ebenso wie dies für die in Fig. 1 und 2 gezeigte Abdeckung 12 im montierten Zustand der Fall ist. Fig. 2 zeigt, dass die Abdeckung 12 eine mittige etwa kreisrunde Öffnung 12a aufweist, durch die die weitere zylindrische Hülse 13 hindurch geschoben werden kann. Die Abdeckung 12 bildet quasi die Vorderwand des Basiselements, so dass zusammen mit den Seitenwänden 1 1 b des Grundkörpers, der Unterwand 12b der Abdeckung und der geteilten Oberwand 12c der Abdeckung ein im wesentlichen geschlossener quaderförmiger Gehäusekörper des Basiselements (siehe Fig. 1) entsteht. Die Oberwand 12c ist deshalb geteilt und hat eine mittige Aussparung, da dort der Tastknopf 14 aufgenommen wird, der gegenüber der Oberwand 12c ein Stück vorsteht, wie man aus Fig. 1 gut erkennt. Nähere Einzelheiten der einzelnen Bauteile ergeben sich aus der nachfolgenden Detailbeschreibung.

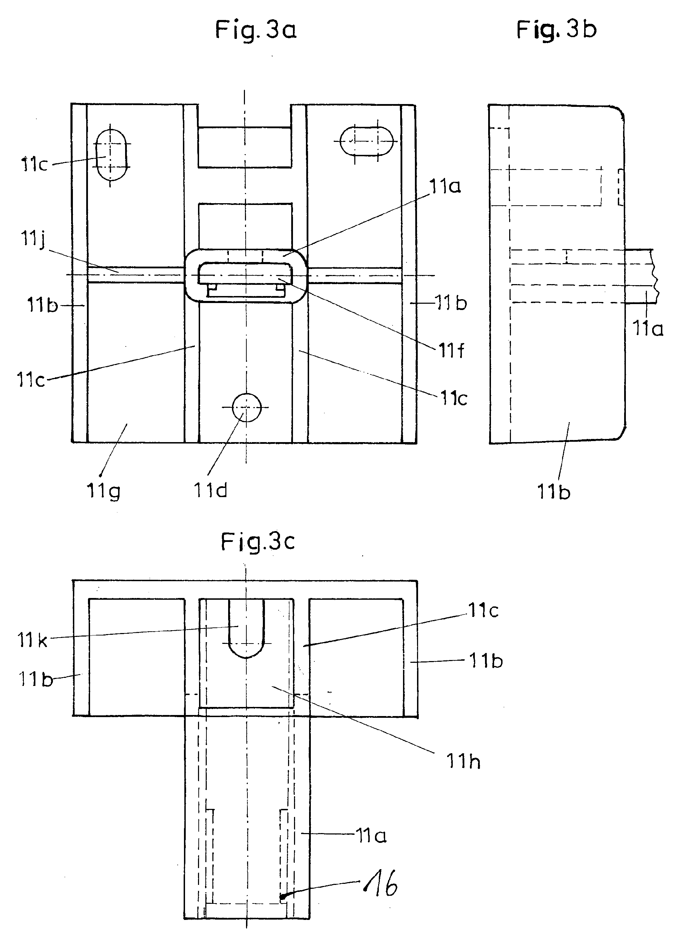

Die Figuren 3a, 3b und 3c zeigen in drei Ansichten den an der Wand anbringbaren Grundkörper 11 des Basiselements. Man erkennt verschiedene Löcher 11d, 11e, durch die Befestigungselemente hindurchtreten können, um den Grundkörper 11 an der Wand anzuschrauben. Weiterhin sind die beiden Seitenwände 11b und die beiden parallel dazu jeweils im Abstand zueinander verlaufenden Zwischenwände 11c erkennbar, wobei die Zwischenwände etwa im äußeren Begrenzungsbereich der Aufnahmehülse 11a verlaufen. Der Querschnitt der Aufnahmehülse 11a ist etwa langoval bzw. annähernd rechteckig, ebenso wie derjenige des Kanals 11f der Aufnahmehülse. Die Löcher 11 d bzw. 11 e befinden sich in der Rückwand 11 g des Grundkörpers.

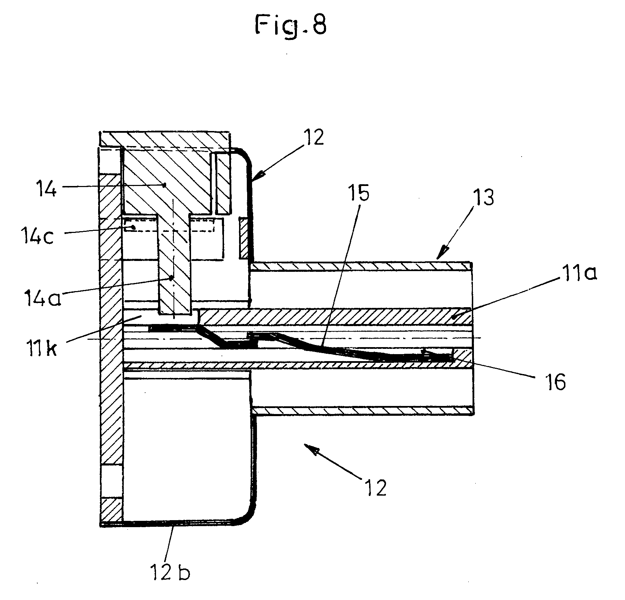

Aus der Draufsicht gemäß Fig. 3c erkennt man den im Grundriss rechteckigen Aufnahmeraum 11 h für den Tastknopf 14 (siehe auch Fig. 1 und Fig. 8). In der Aufnahmehülse 11a befindet sich im hinteren Bereich eine Aussparung 11 k, durch die der Zapfen 14a des Tastknopfs 14 ragt (siehe Fig. 8).

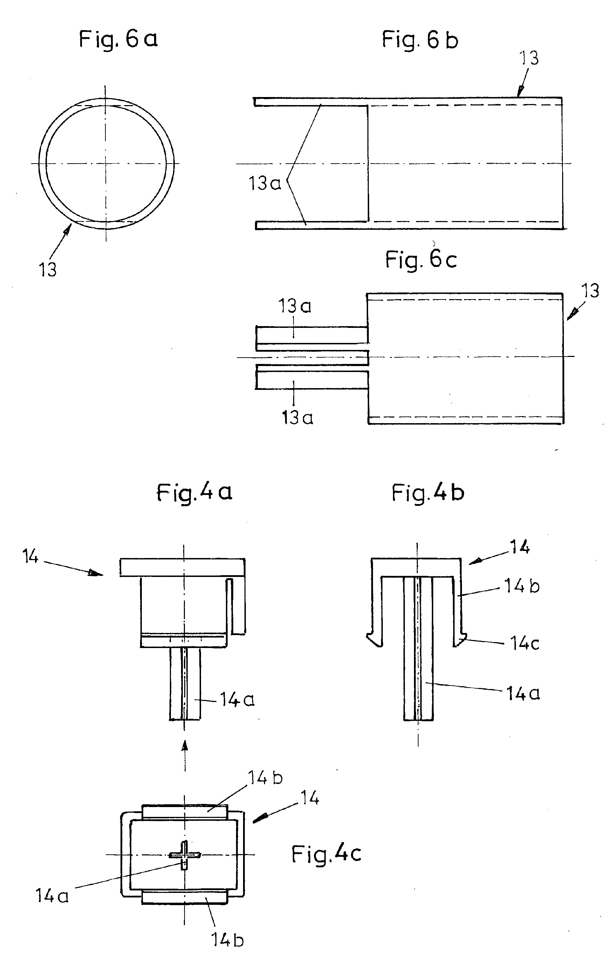

Nachfolgend wird auf die Figuren 4a bis 4c Bezug genommen. Man erkennt dort insbesondere in Fig. 4b und Fig. 4c zwei Rastarme 14b des Tastknopfs, an deren freien Enden jeweils Rastnasen 14c gebildet sind, so dass man den Tastknopf in den Aufnahmeraum 1 1 h des Grundkörpers von oben einführen und durch Verrastung der Rastnasen 14c in dem Grundkörper befestigen kann. Dabei ist der Tastknopf in montierter Position in vertikaler Richtung über eine gewisse Distanz innerhalb des Grundkörpers 11 verschiebbar, so dass man ihn herunterdrücken kann und der Zapfen 14a sich ein Stück nach unten bewegt. Es wird auch auf Fig. 8 verwiesen. Man erkennt dort und auch in Fig. 1, dass in der Ausgangsposition der Tastknopf 14 nach oben hin etwas aus dem Grundkörper 11 vorsteht.

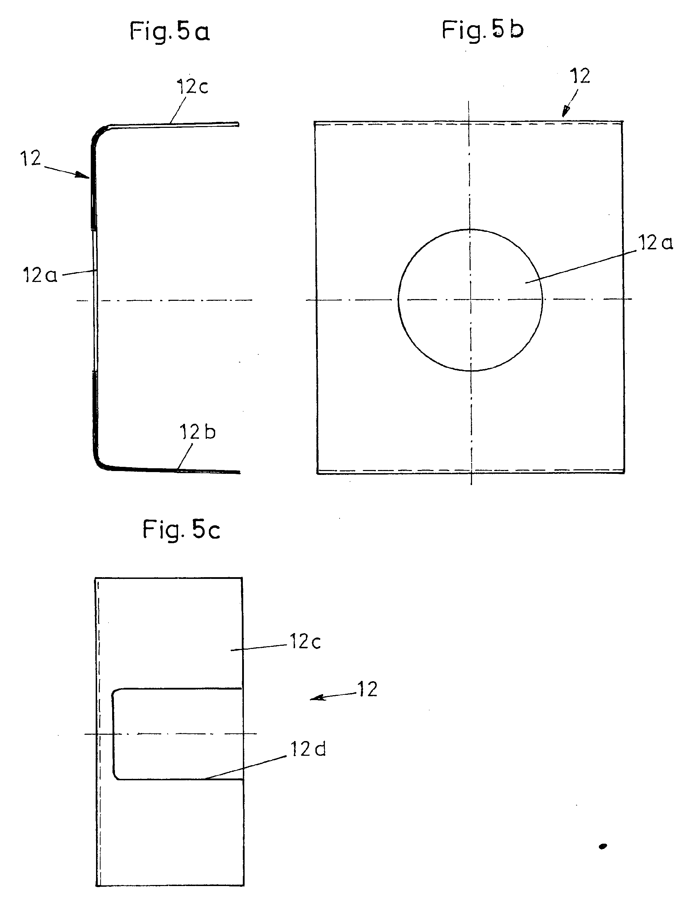

Die in Fig. 5a bis 5c gezeigte Abdeckung 12 dient in erster Linie dazu, gemeinsam mit dem Grundkörper 11 einen geschlossenen Gehäusekörper für das Basiselement zu schaffen. Dies ist auch aus Fig. 2 recht gut entnehmbar. Die Seitenwände 1 1 b des Grundkörpers ergänzen sich mit der Oberwand 12c, der Unterwand 12b und der Vorderwand der Abdeckung 12, in der sich die kreisrunde Ausnehmung 12a befindet. Die Aussparung 12d in der Oberwand dient der Durchführung des Tastknopfs 14.

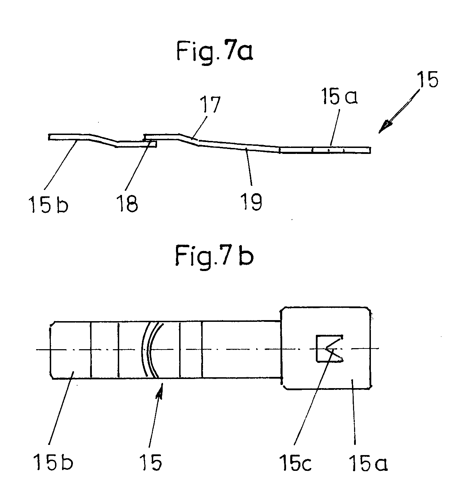

Die Figuren 6a bis 6c zeigen die zylindrische Hülse 13, die in der montierten Position die Aufnahmehülse 11a des Grundkörpers übergreift. Die Hülse 13 kann auch beispielsweise einstückig mit der Abdeckung 12 ausgebildet sein, so dass Aufnahmehülse und Abdeckung anders als in den Figuren dargestellt ein Bauteil bilden. Die Fortsätze 13a, der Hülse 13 sind geschlitzt, damit man diese über die Zwischenstege 11j des Grundkörpers 11 schieben kann (siehe Fig. 3a und Fig. 2).

Das als Arretierungselement 15 dienende Federblech ist in den Fig. 7a und 7b in der Seitenansicht und in der Draufsicht dargestellt. Das Arretierungselement 15 ist hier als längliches Federelement ausgestaltet und weist einen Anschlussbereich 15a, eine Rampe 17, einen Federbereich 19, eine Stoßkante 18 und einen Betätigungsbereich 15b auf.

Der Anschlussbereich 15a ist hier in etwa quadratisch ausgestaltet und weist in etwa mittig einen Vorsprung 15c auf. Der Anschlussbereich 15a dient zur Befestigung innerhalb einer Aufnahme 16, wobei die Aufnahme 16 im Bereich der Vorderkante der Aufnahmehülse 11a bzw. des Aufnahmekanals 11f, insbesondere auf der von dem Grundkörper 11 abgewandten Seite der Aufnahmehülse 1 1 a vorgesehen ist.

Wie aus Fig. 6 ersichtlich erstreckt sich das Arretierungselement 15 in Längsrichtung der Aufnahmehülse 11a in Richtung des Grundkörpers 11. Der Federbereich 19 ist leicht angeschrägt zu dem Anschlussbereich 15a ausgerichtet und sorgt dafür, dass sich der Federbereich 19 zumindest abschnittsweise diagonal durch den Innenraum der Aufnahmehülse 11a erstreckt. Vorzugsweise liegen die Rampe 17 und die Kante 18 auf der gegenüberliegenden Seite der Aufnahme 16 auf der Innenwand des Aufnahmekanals 11f auf. Des Weiteren ist der Betätigungsbereich 15b unterhalb des Zapfens 14a des Tastknopfes 14 angeordnet, so dass das Arretierungselement 15 durch Betätigen des Tastknopfes 14 niedergedrückt werden kann.

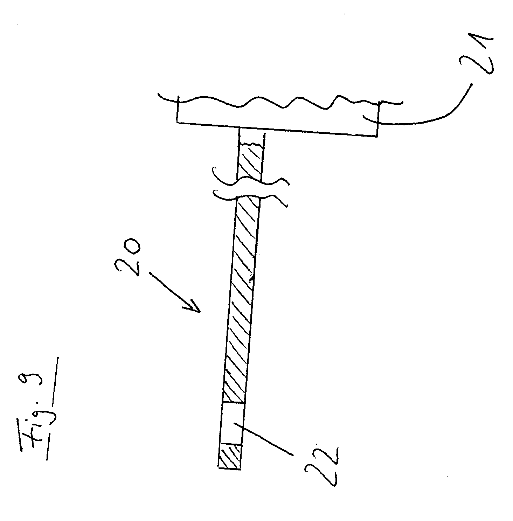

Weitere Details ergeben sich aus einer Beschreibung der Funktion des Arretierungselementes. Hierzu ist in Fig. 9 eine mögliche Ausführungsform eines korrespondierenden Einschubelementes 20 mit daran befestigtem Accessoire 21 dargestellt.

Das Einschubelement 20 ist im Wesentlichen als längliches Flacheisen mit rechteckförmigem Querschnitt ausgestaltet und weist eine Langlochbohrung 22 auf. Als Gegenstand 21 kommt grundsätzlich jeder an einer Wandhalterung zu befestigende Gegenstand, vorzugsweise aus dem Sanitärbereich in Frage.

Wird das Einschubelement 20 in die Aufnahmehülse 1 1 a bzw. den Aufnahmekanal 11f eingeschoben, so wird das Arretierungselement 15 vorzugsweise durch eine Vorbeiführung des Einschubselementes 20 an der Rampe 17 niedergedrückt. Sobald die Kante 18 in die Langlochbohrung 22 eingreifen kann ist das Einschubelement 20 in der Aufnahmehülse 11a arretiert und damit an der Halterung bzw. dem Basiselement 10 befestigt. Die Kante 18 ist hier vorzugsweise als senkrechter Versatz aus dem Arretierungselement 15 ausgeformt und und dazu geeignet eine Bewegung des Einschubelements 20 in einer Richtung durch Eingriff in das Langloch 21 zu verhindern.

Das Einschubelement 20 kann jedoch durch Niederdrücken des Tastknopfes 14 wieder entriegelt werden. Durch Betätigung des Tastknopfes 14 drückt der Zapfen 14a auf den Betätigungsbereich 15b des Arretierungselementes 15, wodurch die Kante 18 aus dem Langloch 22 des Einschubelementes 20 herausgedrückt wird, wodurch das Einschubelement 20 freigegeben wird und aus der Aufnahmehülse 11a gezogen werden kann.

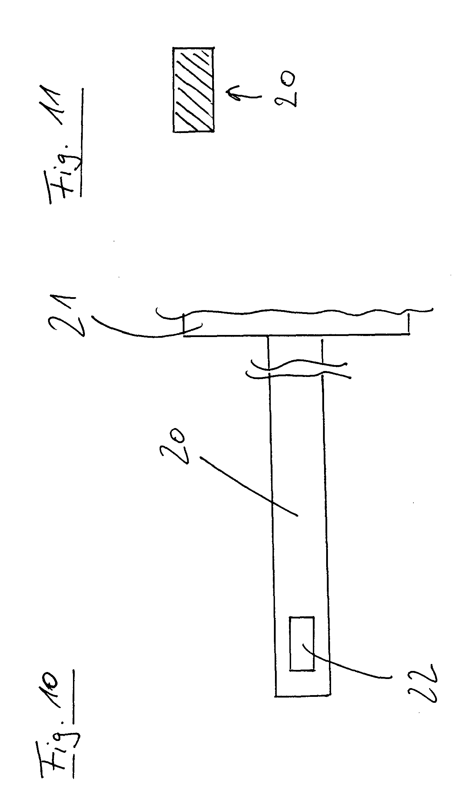

Eine schematische Darstellung eines Einschubelements 20 mit einem daran angebrachten Gegenstand 21, beispielsweise einem Zahnputzbecher, ist in den Fig. 9 bis 11 dargestellt.

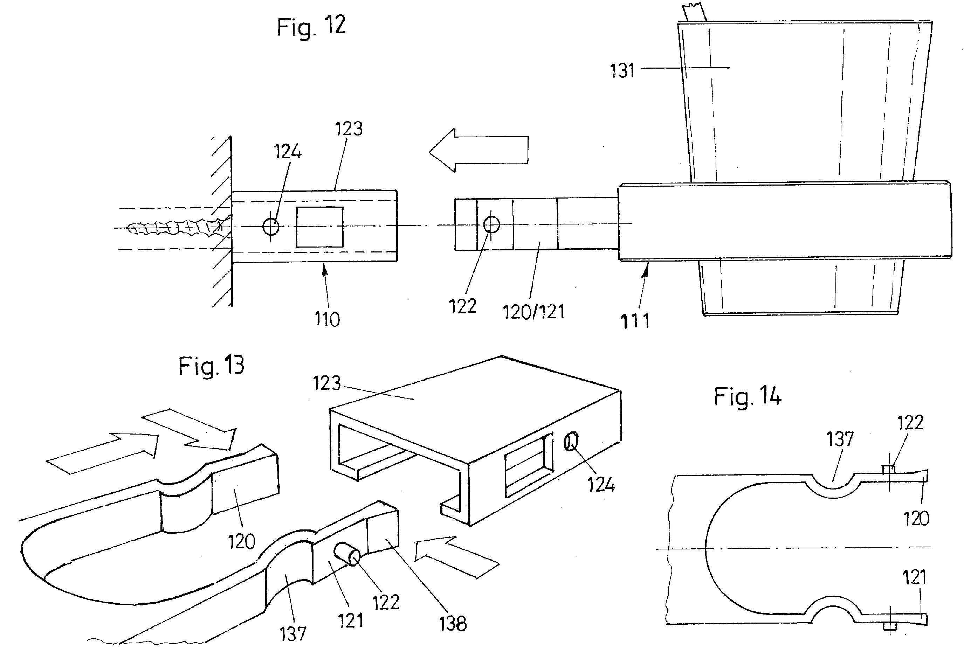

Nachfolgend wird unter Bezugnahme auf die Figuren 12 bis 14 eine weitere alternative Ausführungsvariante der Erfindung näher erläutert. Fig. 12 zeigt ein Halterungselement 111, welches ähnlich wie bei den zuvor beschriebenen Ausführungsbeispielen dazu geeignet ist, beispielsweise einen Zahnputzbecher 131 aufzunehmen. Die Verbindung zwischen Halterungselement 111 und Basiselement 110 geschieht hier jedoch etwas anders. Das Basiselement 110 ist hier als Aufnahme 123 ausgebildet, die zwei als Einschubelemente dienende federnde Schenkel 120, 121 des Halterungselements 111 aufnimmt. Aus der perspektivischen Ansicht gemäß Fig. 13 kann man die Ausführung von Basiselement 110 und Halterungselement 111 etwas besser erkennen. Man sieht, dass die Aufnahme 123 des Basiselements 110 hier kastenförmig ist mit vorzugsweise rechteckigem beziehungsweise C-förmigem Aufnahmequerschnitt. In den Seitenwänden des Basiselements befinden sich Bohrungen oder Aufnahmen 124 für Vorsprünge 122 oder Stifte an den beiden Schenkeln 120, 121 des Halterungselements 111. Die beiden Schenkel 120, 121 sind gegeneinander federnd und weisen dazu Eingriffe 137 auf, die man in der Draufsicht gemäß Fig. 14 gut erkennen kann. Man kann daher die beiden Schenkel 120, 121 mit der Hand gegeneinander drücken und so die verdickten Enden 138 der Schenkel in den Hohlraum der Aufnahme 123 des Basisteils 110 einführen. Die beiden eingeschobenen Schenkel 121, 122 sind dann etwas gegeneinander gedrückt und tendieren dazu, nach außen zu spreizen. Wenn eine solche Einschubposition erreicht ist, dass die beiden Vorsprünge 122 in Höhe der Aufnahme 124 gelangen, dann rasten die Vorsprünge ein und dadurch ist das Halterungselement 111 mit dem Basiselement 110 verrastet. Wenn man das Halterungselement wieder aus dem Basiselement herausziehen möchte, genügt es, die beiden Schenkel 120, 121 zum Beispiel im Bereich der Eingriffe 137 gegeneinander zu pressen, wodurch die Vorsprünge 122 die Aufnahmen 124 verlassen und das Halterungselement 111 aus der kastenförmigen Aufnahme 123 des Basiselements herausgezogen werden kann.

### Bezugszeichenliste

- 10, 110: Basiselement
- 11: Grundkörper
- 11a: Aufnahmehülse
- 11 b: Seitenwände
- 11 c: Zwischenwände
- 11 d, e: Löcher
- 11f: Aufnahmekanal
- 11g: Rückwand
- 11 h: Aufnahmeraum
- 11 j: Zwischenstege
- 11k: Aussparung
- 12: Abdeckung
- 12a: Öffnung
- 12b: Unterwand
- 12c: geteilte Oberwand
- 12d: Aussparung
- 13: Hülse
- 13a: wandseitige Fortsätze
- 14: Tastknopf
- 14a: Zapfen
- 14b: Rastarme
- 14c: Rastnasen
- 15: Arretierungselement, Federblech
- 15a: Anschlussbereich
- 15b: Betätigungsbereich
- 15c: Vorsprung
- 16: Aufnahme
- 17: Rampe
- 18: Kante
- 19: Federbereich
- 20: Einschubelement
- 21: Gegenstand
- 22: Langloch
- 111: Halterungselement
- 120, 121: federnde Schenkel
- 122: Vorsprünge
- 123: Aufnahme
- 124: Bohrungen
- 131: Zahnputzbecher
- 137: Eingriffe
- 138: verdickte Enden der Schenkel 120, 121

## Patentansprüche

1. Halterung zur lösbaren Befestigung eines Gegenstandes (21) an einer Wand, umfassend ein an einer Wand befestigbares Basiselement (10, 110), **dadurch gekennzeichnet, dass** die Halterung senkrecht zu dem Basiselement (10, 110) ausgerichtete oder im wesentlichen ausladend an dem Basiselement (10, 110) angebrachte oder von dem Basiselement (10, 110) gebildete Aufnahmemittel umfasst, die als Aufnahmehülse (11a) oder Aufnahme (123) ausgeführt sind, wobei die Aufnahmemittel zum Einschieben mindestens eines Einschubelements (20) mit dem daran befestigten Gegenstand (21) geeignet und mit einem Arretierungselement (15) zur lösbaren jedoch schraubenlosen Befestigung des mindestens einen Einschubelementes (21) an dem Basiselement (10, 110) ausgestattet sind.

2. Halterung nach Anspruch 1, **dadurch gekennzeichnet, dass** die Aufnahmehülse (1 1 a) eine längliche Form aufweist und mit einem Aufnahmekanal (11f) ausgestattet ist, wobei der Arretierungsmechanismus zumindest abschnittsweise innerhalb des Aufnahmekanals (11f) angeordnet ist

3. Halterung nach Anspruch 1 oder 2, **dadurch gekennzeichnet, dass** das Arretierungselement (15) in Form einer entlang des Aufnahmekanals (11f) angeordneten länglichen Blattfeder ausgestaltet ist.

4. Halterung nach einem der Ansprüche 1 bis 3, **dadurch gekennzeichnet, dass** ein in das Basiselement (10) integriertes Bauteil (14) nach Art eines Tastknopfs vorgesehen ist, welches eingedrückt wird um die Verbindung zwischen Arretierungselement (15) und dem Einschubelement (20) zu lösen, wobei der Tastknopf (14) mit einem Grundkörper (11) des Basiselements verrastbar ist.

5. Halterung nach einem der Ansprüche 1 bis 4, **dadurch gekennzeichnet, dass** der Tastknopf (14) einen vorstehenden Zapfen (14a) aufweist, der auf einen Betätigungsbereich (15b) des Arretierungselements (15) drückt, wenn der Tastknopf (14) betätigt wird.

6. Halterung nach einem der Ansprüche 1 bis 5, **dadurch gekennzeichnet, dass** der Grundkörper (11) des Basiselements (10) mindestens zwei Seitenwände (1 1 b) aufweist, die diesen seitlich begrenzen und etwa senkrecht im montierten Zustand des Basiselements (10) verlaufen.

7. Halterung nach einem der Ansprüche 1 bis 6, **dadurch gekennzeichnet, dass** der Grundkörper (11) des Basiselements eine Abdeckung (12) umfasst mit einer Vorderwand und / oder einer Unterwand (12b) und / oder einer Oberwand (12c).

8. Halterung nach einem der Ansprüche 1 bis 7, **dadurch gekennzeichnet, dass** sich Abdeckung mit Vorderwand, Unterwand (12b), Oberwand (12c) und den Seitenwänden (11b) des Grundkörpers (11) zu einem weitgehend geschlossenen Gehäusekörper ergänzen.

9. Halterung nach einem der Ansprüche 1 bis 8, **dadurch gekennzeichnet, dass** eine vorzugsweise abschnittsweise zylindrisch ausgebildete Hülse (13) vorgesehen ist, die die Aufnahmehülse (11a) umgibt.

10. Halterung nach einem der Ansprüche 1 bis 9, **dadurch gekennzeichnet, dass** die Hülse (13) mit Anformungen (13a) auf Teile des Grundkörpers (11) aufschiebbar oder aufsteckbar ist und die Hülse (13) im montierten Zustand die Aufnahmehülse (11a) umgibt.

11. Halterung nach einem der Ansprüche 1 bis 10, **dadurch gekennzeichnet, dass** das Arretierungselement (15) in nachfolgender Abfolge einen Anschlussbereich (15a), einen Federbereich (19), eine Rampe (17), eine Kante (18), sowie einen Betätigungsbereich (15b) aufweist.

12. Halterung nach einem der Ansprüche 1 bis 11, **dadurch gekennzeichnet, dass** das die Aufnahmehülse (1 1 a) auf der dem Basisteil abgewandten Bereich eine Aufnahme (16) aufweist, wobei das Arretierungselement (15) mit dem Anschlussbereich (15a) in der Aufnahme befestigt ist, wobei sich das Arretierungselement (15) in Richtung des Basiselements (10) durch die Aufnahmehülse (11a) erstreckt.

13. Halterung nach einem der Ansprüche 1 bis 12, **dadurch gekennzeichnet, dass** die Verbindung zwischen dem Basiselement (10, 110) und dem mindestens einen Einschubelement wenigstens einen Bajonettverschluss oder Drehriegelverschluss umfasst.

14. Halterung nach einem der Ansprüche 1 bis 13, **dadurch gekennzeichnet, dass** das mindestens eine Einschubelement gegen die Kraft einer Feder in die Aufnahmemittel einschiebbar ist.

15. Halterung nach Anspruch 1, **dadurch gekennzeichnet, dass** die Halterung zwei Einschubelemente umfasst, die als endseitig frei gegeneinander federnde Schenkel (120, 121) ausgebildet sind und das Basiselement (110) eine diese Schenkel (120, 121) beim Aufschieben übergreifende Aufnahme (123) aufweist oder ausbildet, mit der die Schenkel (120, 121) eine Rastverbindung eingehen können.

16. Halterung nach Anspruch 15, **dadurch gekennzeichnet, dass** nach außen ragende Vorsprünge (122) an den Schenkeln (120, 121) angeordnet sind, die in Aufnahmen (124), vorzugsweise Bohrungen, des Basiselements (110) einrasten können.

17. Einschubelement (20) für eine Halterung nach einem der Ansprüche 1 bis 16, **dadurch gekennzeichnet, dass** das Einschubelement (20) eine längliche Gestalt aufweist, wobei einerseits endseitig ein Langloch (22) und andererseits endseitig der zu befestigende Gegenstand (21) angebracht ist.

18. Einschubelement nach Anspruch 17, **dadurch gekennzeichnet, dass** das Einschubelement (20) eine zumindest abschnittsweise zu dem Aufnahmekanal (11f) der Aufnahmehülse (11a) korrespondierende Form aufweist.

19. Einschubelement nach einem der Ansprüche 17 oder 18, **dadurch gekennzeichnet, dass** das Langloch (20) eine zu dem Bereich aus Rampe (17) und Kante (18) des Arretierungselementes (15) korrespondierende Form aufweist.
